# EUROPEAN PATENT APPLICATION

(11) **EP 3 792 752 A1**
(43) Date of publication of application: **17.03.2021**
(21) Application number: 19196838.7
(22) Date of filing: 11.09.2019
(51) Int. Cl.: G06F 9/30, G06F 1/3234

(54) **ARITHMETIC UNIT**

(71) Applicant: Nokia Solutions and Networks Oy, 02610 Espoo (FI)
(72) Inventor: PURI, Subash, 02610 Espoo (FI); AIROLDI, Roberto, 02610 Espoo (FI)
(74) Representative: Nokia EPO representatives

(57) **Abstract**

An apparatus, method and computer program is provided, comprising: enabling setting of a software-defined precision level for a floating point arithmetic unit; enabling setting of a hardware-defined precision level for said floating-point arithmetic unit; and defining one of a plurality of precision levels for said floating point arithmetic unit, wherein said precision level of said floating point arithmetic unit is set to said software-defined precision level unless over-ridden by said hardware-defined precision level.

## Description

### Field

The present specification relates to arithmetic units and processor architecture, such as floating point arithmetic units and processors.

### Background

One parameter for the design and implementation of digital hardware is the precision of computations and data representations. Although developments have been made, there remains scope for further developments in this area.

### Summary

In a first aspect, this specification describes an apparatus comprising: means for enabling setting of a software-defined precision level for a floating point arithmetic unit; means for enabling setting of a hardware-defined precision level for said floating-point arithmetic unit; and means for defining one of a plurality of precision levels for said floating point arithmetic unit, wherein said precision level of said floating point arithmetic unit is set to said software-defined precision level unless over-ridden by said hardware-defined precision level. The plurality of precision levels for said floating point arithmetic unit may, for example, comprise: 32-bit, 24-bit and 16-bit precision levels.

Some embodiments further comprise means for masking bits of said floating point arithmetic unit in a lower precision level.

The means enabling setting of a software-defined precision level may comprise a dedicated software instruction.

The means for enabling setting of said hardware-defined precision level may comprise a hardware port. The provision of a hardware port may enable a hardware-defined precision level to be written to (e.g. the port may be externally accessible). A software-defined precision level may be superseded by writing to the hardware port.

The means for defining one of a plurality of precision levels for said floating point arithmetic unit may comprises a precision select register. By way of example, the precision select register may have a number of possible values (e.g. 00, 01, 10, 11) that can define different precision levels.

Some embodiments further comprise means for defining a minimum required precision level for an arithmetic operation. Alternatively, or in addition, some embodiments further comprise means for defining a maximum required precision level of an arithmetic operation.

Some embodiments further comprise means for determining a requirement for reduced power consumption. The means for determining a requirement for reduced power consumption may be configured to instruct use of a low precision level using said means for enabling setting of hardware-defined precision level for said floating-point arithmetic unit. In some embodiments, the means for determining a requirement for reduced power consumption may comprise a power management module.

The said means may comprise: at least one processor; and at least one memory including computer program code, the at least one memory and the computer program configured, with the at least one processor, to cause the performance of the apparatus.

In a second aspect, this specification describes a system comprising a floating point arithmetic unit and an apparatus as described with reference to the first aspect.

In a third aspect, this specification describes a method comprising defining one of a plurality of precision levels for a floating point arithmetic unit, wherein said precision level of said floating point arithmetic unit is set to a software-defined precision level unless over-ridden by a hardware-defined precision level (e.g. the software-defined precision level may be superseded by writing to a hardware port). The plurality of precision levels for said floating point arithmetic unit may, for example, comprise: 32-bit, 24-bit and 16-bit precision levels.

The method may further comprise masking bits of said floating point arithmetic unit in a lower precision level.

A dedicated software instruction may be provided for enabling setting of said software-defined precision level.

A minimum required precision level may be defined for an arithmetic operation. Alternatively, or in addition, a maximum required precision level of an arithmetic operation may be defined.

The method may further comprise determining a requirement for reduced power consumption (e.g. using a power management module). A lower precision level may be used in response to determining said requirement for reduced power consumption.

In a fourth aspect, this specification describes an apparatus configured to perform any method as described with reference to the third aspect.

In a fifth aspect, this specification describes computer-readable instructions which, when executed by computing apparatus, cause the computing apparatus to perform any method as described with reference to the third aspect.

In an sixth aspect, this specification describes a computer readable medium comprising program instructions stored thereon for performing at least the following: defining one of a plurality of precision levels for a floating point arithmetic unit, wherein said precision level of said floating point arithmetic unit is set to a software-defined precision level unless over-ridden by a hardware-defined precision level.

In a seventh aspect, this specification describes a computer program comprising instructions for causing an apparatus to perform at least the following: defining one of a plurality of precision levels for a floating point arithmetic unit, wherein said precision level of said floating point arithmetic unit is set to a software-defined precision level unless over-ridden by a hardware-defined precision level.

In an eighth aspect, this specification describes an apparatus comprising: at least one processor; and at least one memory including computer program code which, when executed by the at least one processor, causes the apparatus to: define one of a plurality of precision levels for a floating point arithmetic unit, wherein said precision level of said floating point arithmetic unit is set to a software-defined precision level unless over-ridden by a hardware-defined precision level.

In a ninth aspect, this specification describes an apparatus comprising: a software precision level module (e.g. a register, such as a float register file) for enabling setting of a software-defined precision level for a floating point arithmetic unit; a hardware precision level module (e.g. a hardware port) for enabling setting of a hardware-defined precision level for said floating-point arithmetic unit; and a precision-level module (e.g. a register, such as a precision select register) for defining one of a plurality of precision levels for said floating point arithmetic unit, wherein said precision level of said floating point arithmetic unit is set to said software-defined precision level unless over-ridden by said hardware-defined precision level. The plurality of precision levels for said floating point arithmetic unit may, for example, comprise: 32-bit, 24-bit and 16-bit precision levels. A mask may be provided for masking bits of said floating point arithmetic unit in a lower precision level. A power management module may be provided for determining a requirement for reduced power consumption.

### Brief description of the drawings

Example embodiments will now be described, by way of non-limiting examples, with reference to the following schematic drawings, in which:
FIGS. 1 and 2 are block diagrams of systems in accordance with example embodiments;
FIGS. 3A to 3D are plots demonstrating aspects of example embodiments;
FIG. 4 is a block diagram of a system in accordance with an example embodiment;
FIG. 5 is a flow chart showing an algorithm in accordance with an example embodiment;
FIGS. 6 and 7 are block diagrams of systems in accordance with an example embodiment;
FIGS. 8 and 9 are flow charts showing algorithms in accordance with example embodiments;
FIG. 10 is a block diagram of components of a system in accordance with an exemplary embodiment; and
FIGS. 11A and 11B show tangible media, respectively a removable non-volatile memory unit and a Compact Disc (CD) storing computer-readable code which when run by a computer perform operations according to example embodiments.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

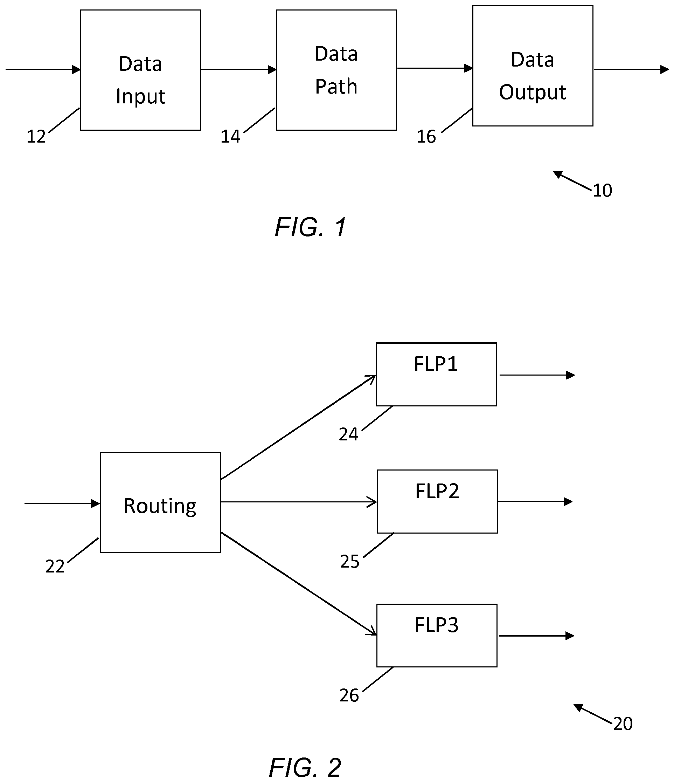

FIG. 1 is a block diagram of a system, indicated generally by the reference numeral 10, in accordance with an example embodiment. The system 10 comprises a data path 14. A data input 12 is provided to the data path 14 and a data output 16 is output by the data path.

One parameter of the data path 14 is a level of precision (i.e. the precision of computations performed by the data path and the precision of data representations being processed by the data path). The higher the precision that is required, the more complex the design of the data path 14 will be. Moreover, an increased complexity, on the design side, means higher power consumption, larger design area and, as a consequence, higher costs. Many application domains, such as 3D graphics, high definition audio, machine learning and telecommunications, may require high accuracy and dynamic ranges for data processing. In this context, the data path 14 may be implemented using floating-point (FLP) capable application specific processors (ASIPs).

Even if high accuracy and dynamic ranges may be a requirement, such requirements may not be uniform across an application area. In fact, it is possible that for certain cases, lower precision may be sufficient, whilst for other cases, a higher precision is required. As an example, in massive multiple-input multiple-output (MIMO) processing, matrix sizes may be bounded by the number of layers and the number of receiving/transmitting antennas. Therefore, according to the MIMO configuration, the matrix sizes scale accordingly; the matrix sizes may, for example, span from 2x2 to 32x32, or even higher. The computational accuracy required by the transformations applied to a 2x2 matrix can be very different from the one required by a 32x32 matrix. Thus, a higher precision could be utilized for the operations on larger matrices, whilst a lower precision may be adequate for smaller matrices. To support these variations, different floating-point data types may be used (e.g. half-precision, single-precision, double precision and quad-precision data types).

Floating-point data-paths can bring the required computational accuracy and dynamic range required by a range of circumstances, such as the training of neural networks, the processing of high definition audio, and for massive MIMO (mMIMO) and vectoring in telecommunications. However, the high dynamic range and accuracy offered by floating-point data-paths might not be always needed. Therefore, there might be application scenarios where half-precision floating-point is sufficient and others where more dynamic range is required and therefore the utilization of single/double/quad- precision floating-point is needed. As an example, the training of neural networks is generally done at high accuracy i.e. utilizing single- or double-precision floating-point while the inference processing is performed at lower accuracy (e.g. half-precision). Similarly, in mMIMO, larger MIMO configurations require higher precision than lower rank configurations.

To support these variations, multiple dedicated floating point data paths may be provided covering the range of accuracy required by the different use cases. By way of example, FIG. 2 is a block diagram of a system, indicated generally by the reference numeral 20, in accordance with an example embodiment. The system 20 comprises a routing arrangement 22, a first floating point data path (FLP1) 24, a second floating point data path (FLP2) 25 and a third floating point data path (FLP3) 26. The first, second and third floating point data paths 24 to 26 have different precision levels. The routing arrangement 22 enables an input to be routed to a floating point data path having the appropriate precision level in the circumstances.

As an alternative to providing multiple dedicated floating-point data paths, one could design a floating-point data path that supports the highest precision levels (which could be viewed as supporting a worst case scenario). Both methods have advantages and disadvantages. The utilization of different floating point data paths, or precision levels, requires, from a software point-of-view, the usage of different data-types and ultimately different source codes. This may translate in higher memory requirements and therefore costs. If a single FLP-data-path, supporting the highest precision, is utilized, the software would be unified reducing the stress on the memory system. However, the associated power consumption may not be optimal. Low power consumption may be one of the starting points in designing computer systems, and therefore providing software implementations that are not written to optimize power consumption may be unacceptable in some circumstances.

The use of low precision floating point data paths can lead to a lack of accuracy in some example embodiments. An analysis was performed to assess the effect on accuracy of represented data when precision bits in mantissa of single precision floating-point representation (IEEE754 standard) were discarded using a bit-accurate model written in C-language. The bit-accurate model was developed for addition, subtraction, multiplication and multiply-accumulate (MAC) operations. Random floating-point numbers in the range [-1, 1] were fed to the bit-accurate model. The output of the model was then compared to the reference values obtained using a reference single precision floating-point engine. 95% confidence intervals of error percentage were calculated for each precision.

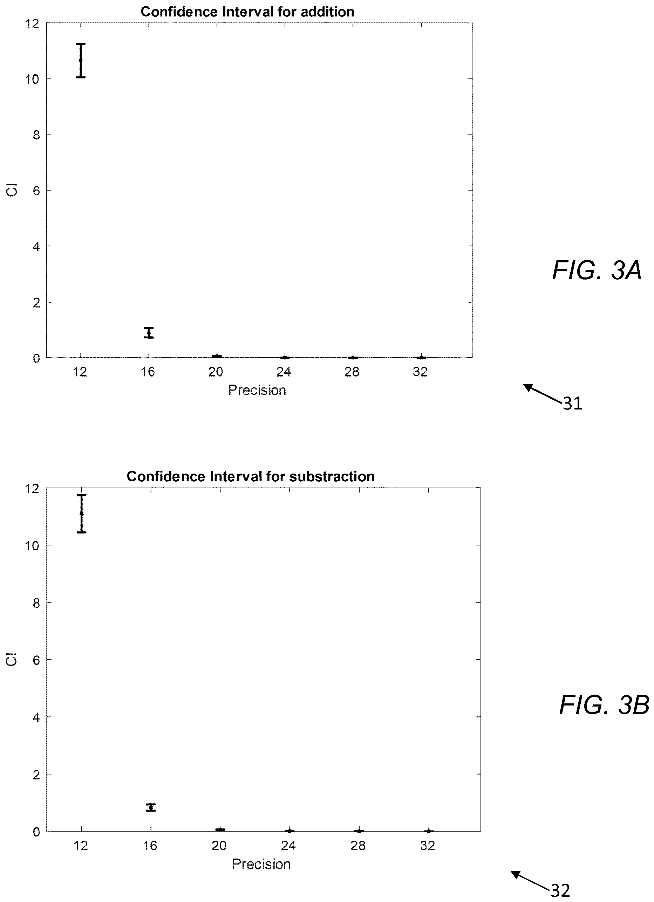

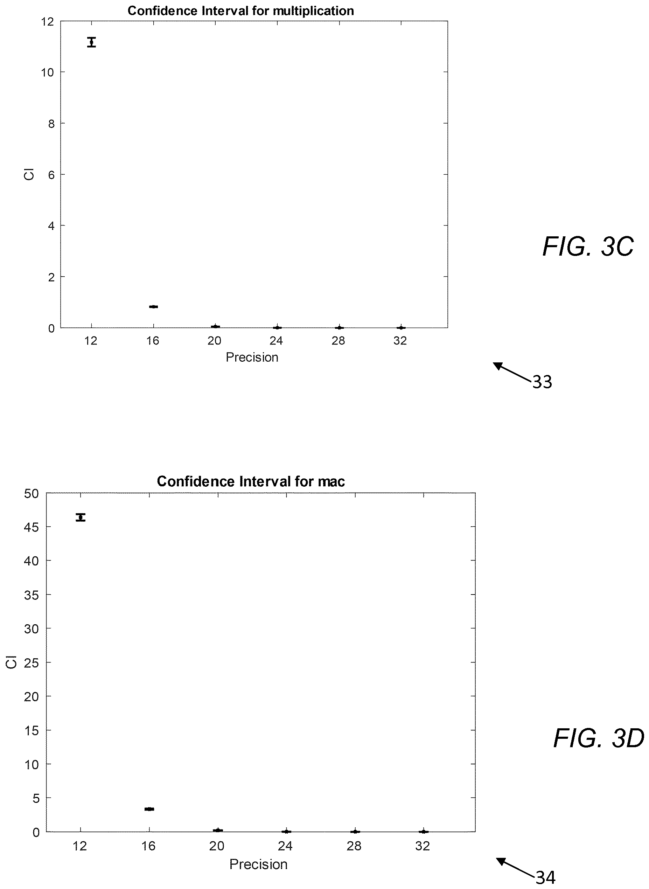

FIGS. 3A to 3D are plots demonstrating aspects of example embodiments. Those plots show confidence interval plots for selected precisions and operations. More specifically, FIG. 3A is a plot, indicated generally by the reference numeral 31, showing a confidence interval plot for example addition operations, FIG. 3B is a plot, indicated generally by the reference numeral 32, showing a confidence interval plot for example subtraction operations, FIG. 3C is a plot, indicated generally by the reference numeral 33, showing a confidence interval plot for example multiplication operations and FIG. 3D is a plot, indicated generally by the reference numeral 34, showing a confidence interval plot for example multiply-accumulate operations.

The confidence interval plot 31 of FIG. 3A suggest that 20-bit representation of floating-point numbers is sufficient to represent the generated random numbers. Except for multiply-accumulate (MAC) operation (as shown in FIG. 3D), in a 16-bit representation we can be 95% sure that the accuracy loss is approximately 1%. Multiply-accumulate operations tend to accumulate the error over successive calculation, hence it was expected that the error increased up 3% for a 16-bit representation. It can be also seen that, below 16-bit representation, the accuracy loss is dramatic and does not serve well for any accuracy-demanding applications.

For the specific implementations described herein, 16-, 24- and 32-bit representations were selected. However, the principles described herein are not restricted to such representations; a designer could choose any/additional precision levels when/if needed.

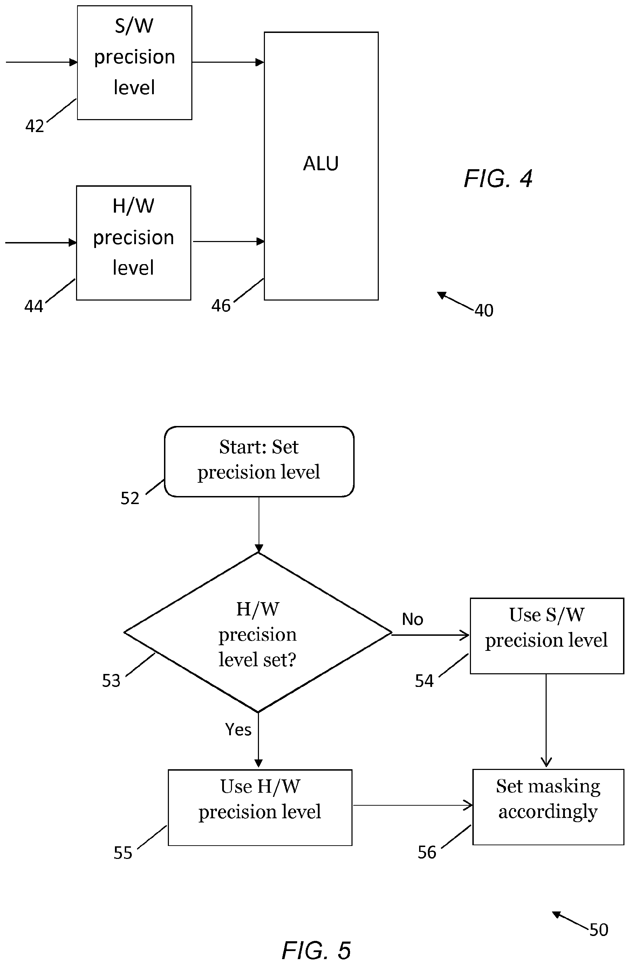

FIG. 4 is a block diagram of a system, indicated generally by the reference numeral 40, in accordance with an example embodiment. The system 40 comprises a software precision level module 42, a hardware precision level module 44 and an arithmetic logic unit 46.

As discussed further below, the software precision level module 42 enables the setting of a software-defined precision level for a floating-point arithmetic unit (such as the arithmetic logic unit 46) and the hardware precision level module 44 enables the setting of a hardware-defined precision level for said floating-point arithmetic unit. The arithmetic unit 46 may include (or be associated with) an arrangement for defining one of a plurality of precision levels for said floating point arithmetic unit.

In this way, a dynamically scalable single-precision floating point data-path is provided. A unified floating-point variable type is also defined herein. This new floating-point data type definition is agnostic to the precision level set for the floating point data path and may therefore allow operation at full precision or limited precision without any modification to the application software. The provision of such scalable and dynamically adaptable floating point data paths and software data-types are of interest for reducing memory utilization and dynamically tuning the power consumption according to the required workload requirements.

The switching of the floating point data path's precision may be controlled either via software (e.g. the software precision level module 42 of the system 40) or via hardware (e.g. the hardware precision level module 44). In the software-controlled version, a switch may be made accessible to a programmer in order to control the accuracy of the floating point data path. The switch may be exercised by a dedicated instruction in the Instruction Set Architecture (ISA) of an ASIP. In fact, this instruction may allow switching of the precision of the floating point data path in a single clock cycle. The instruction modifies the precision of all the floating point data path components (addition and multiplication blocks) that utilizes floating-point circuitry where the input parameter of the instruction selects the desired precision. When the signals of the floating point data path do not change values over time, the storage elements continue to store the old values without consuming extra power in the processor. This implementation allows to scale up, or down, the precision in a single clock cycle delay. The register controlling the precision of the floating point data path is also accessible via hardware. Indeed, access to the hardware precision level module may be given to another system without any modification of the application software. This option enables the portability of already existing software as the scaling of precision is now decoupled from the software/application implementation.

To view the application of this hardware-controlled scaling in context, consider the following example. A host CPU controls a number of smaller ASIPs, offloading processing tasks to those; the level of accuracy needed can vary and can be directly be decided by the host CPU. In fact, the host CPU would have access to the precision register of each ASIP and the precision could be set dynamically without any modification of the ASIP firmware. Lowering the precision would allow the host CPU to perform the same task, in the same time but with a reduced energy/power consumption. This application scenario could be beneficial in a case where a power limit (e.g. of a SoC circuit) is approached, even if for a short period of time. In fact, the host CPU could temporally lower the precision level and reduce the amount of power consumed by the ASIPs without impacting the system throughput as the only impact would be on the accuracy of the computation.

Finally, decoupling the precision level from the software implementation may reduce the amount of software to be written and, as a consequence, the code size of the program. The reduced code foot-print brings costs and power benefits as smaller memories may be utilized. This is especially important in embedded systems where memory is generally a scarce resource.

To highlight this, consider the following software code in which an application function is coded separately for different accuracy levels, wherein a main function calls one of the multiple functions.

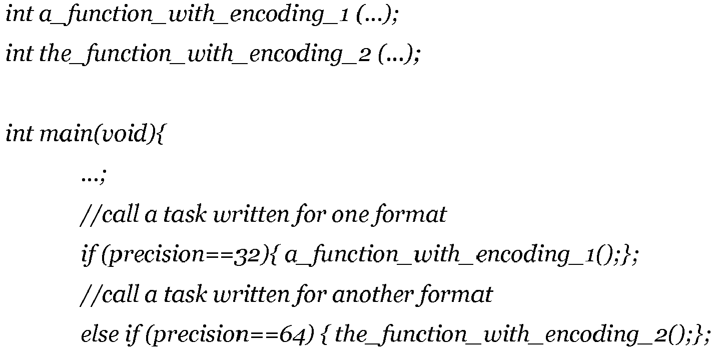

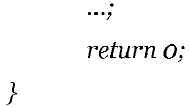

Now consider the following approach in which the application function is written just once for a generic precision level; then, in the main function, the correct precision level is set before calling the function.

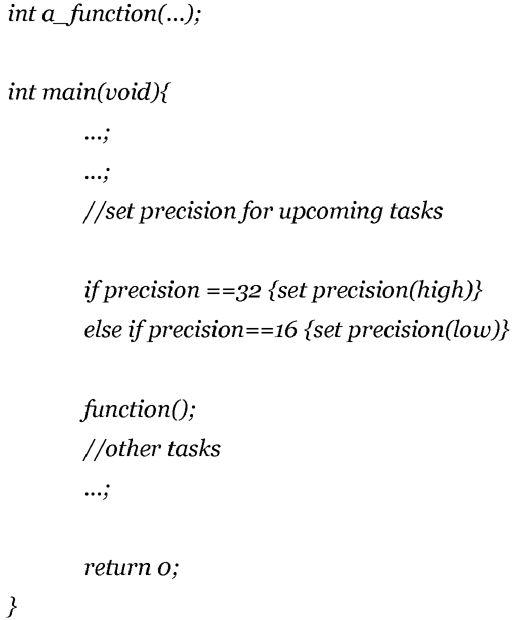

FIG. 5 is a flow chart showing an algorithm, indicated generally by the reference numeral 50, in accordance with an example embodiment. The algorithm may be implemented using the system 40 described above.

The algorithm 50 is an algorithm for setting a precision level for the arithmetic unit 46. The algorithm 50 starts at node 52.

At operation 53, the algorithm 50 determines whether a hardware precision level has been set. For example, it may be determined whether the hardware precision level module 44 has defined a hardware precision level. If a hardware precision level has not been set, the algorithm 50 moves to operation 54, where the algorithm 50 determines that a software precision level (as defined in the software precision level module 42) should be used. If a hardware precision level has been set, the algorithm 50 moves to operation 55, where the algorithm 50 determines that the hardware precision level should be used.

Finally, in operation 56, masking of the arithmetic unit 46 is set depending on whether the software precision level is determined to be used (in operation 54) or the hardware precision level is determined to be used (in operation 55). (Example masking arrangements are discussed further below.)

Thus, in the algorithm 50, the precision level of said floating point arithmetic unit 46 is set to the software-defined precision level unless over-ridden by the hardware-defined precision level.

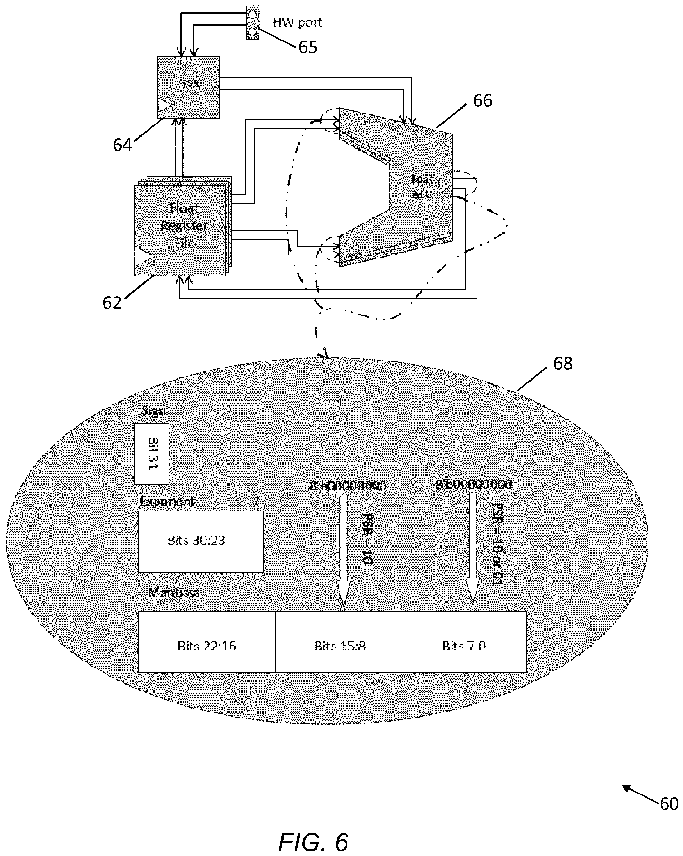

FIG. 6 is a block diagram of a system, indicated generally by the reference numeral 60, in accordance with an example embodiment. The system 60 comprises a float register file 62, a precision select register 64, a hardware port 65 and a floating point arithmetic logic unit 66. Also shown in FIG. 6 is an example 32-bit floating point data representation 68.

The system 60 is an example implementation of the system 40 described above. As discussed further below, the float register file 62 enables the setting of a software-defined precision level (and is therefore similar to the software precision level module 42 of the system 40) and the hardware port 65 enables the setting of a hardware-defined precision level (and is therefore similar to the hardware precision level module 44 of the system 40). The arithmetic logic unit 66 is similar to the arithmetic unit 46 of the system 40. The hardware port 65 enables the hardware-defined precision level discussed above to be written to (i.e. it is externally accessible). Thus, a software-defined precision level can be superseded by writing to the hardware port 65.

The content of the precision select register 64 defines one of plurality of precision levels for the arithmetic logic unit 66. For example, the register 64 may have a number of possible values (e.g. 00, 01, 10, 11) that can define different precision levels. The precision level is implemented by masking bits of the floating point data representation 68 as discussed further below.

As shown in FIG. 6, the data representation 68 comprises a sign bit (bit 31), an exponent (bits 30 to 23) and a mantissa (bits 22 to 0). The precision level can be adjusted by adjusting masking of the mantissa (e.g. selectively setting some bits of the mantissa to zero). The masking of the mantissa may be done for example by setting a number of least significant bits (LSBs) of the mantissa to zero.

In the example data representation 68, the precision levels are set according to the content of the precision select register 64. Specifically, a register value of 00 corresponds to a 32-bit precision, a register value of 01 corresponds to a 24-bit precision, and a register value of 10 corresponds to a 16-bit precision representation.

By way of example, the value 0,56216=0x3f0fe868. With 24-bit precision, that term may be expressed as: 0x3f0fe800 (with the 8 least significant bits being masked). Moreover, with 16-bit precision, that term may be expressed as: 0x3f0f0000 (with the 16 least significant bits being masked).

Precision-select signals interface with the arithmetic logic unit 66 through the precision select register (PSR) 64. The PSR 64 is designed such that its value can be overridden by an external CPU through the hardware port 65. Overriding priority addresses the problem of rewriting code for different precisions and loading a new precision-specific software in the ASIP, thereby saving numerous cycles of update time. In addition, the control for precision selection may be handed to a master CPU which can decide the required precision to each of a number of slave ASIPs that it connects to. The register 64 can also be updated through software. In this ASIP implementation an intrinsic instruction set_precision(int x) may be provided to programmer to choose a required precision when he/she feels need for it. Parameter x can be constructed from concatenation of two precision encodings in any order. This allows precision control of desired floating-point units separately as well as for all the systems if so desired. In an example ASIP implementation, the lowest 2-bit encodes precision for multiplication and MAC units, whereas adjacent 2-bit encodes for addition/subtraction units. As an illustration of its use; set_precision('b0110) forces all the addition/subtraction units to use 24-bit precision and multiplication/MAC units to use 16-bit precision, whereas set_precision('b0101) forces the ASIP to use 24-bit precision on all the floating-point units.

In an example implementation of the arithmetic unit 66, floating-point units, alongside the operands and operations signals, precision select signal bus of 2 bits wide was added that selects desired bits out of mantissa from each operand and writes only the desired mantissa bits from result signals to register file, while keeping unused bits to constant 0. Effectively, the selection keeps a fixed portion of modules (e.g. multipliers/adders) in floating-point units from switching until the precision is changed. The constant value from float-units is propagated through each register in a floating point data path and kept constant throughout several clock cycles, until the precision-select signal forces to next mode of operation.

In the system 60, the direction of data flow and precision control signals are shown and can be generalized to any processors. The arithmetic logic unit 66 can include floating-point functional units which are not confined to only basic multiplication, addition/subtraction units. The functional units in arithmetic logic unit 66 can be designed to have components with selectable bypass-modes.

Existing floating-point units are typically optimized for 32-bit precision floating point operations and do not require complex modification for lower precision modes; rather a simple multiplexer may be used that chooses a required number of bits at various stages to introduce lesser switching activity of signals. Thus, increased speed and reduced power consumption may be achieved without sacrificing substantial core area. Multi-cycle floating-point units may be designed to perform variable precision arithmetic, but this uses more cycle counts and is also accompanied by software profiling which is costly to memory and CPU cycles. As a concrete example, a multi-cycle floating-point unit that has 16-bit precision can be designed so that it can perform 32-bit precision arithmetic after 3 iterations. So, the processor will be fast in 16-bit mode but for every 32-bit operation, the processor lags by 2 cycles. For real-time systems, like communication systems, such delay may impose difficulty in realization of punctual-hardware because multi-cycle functional units may have to be compensated by pipelines and higher synthesis frequency constraints. It is demonstrated through simulation that dynamic power gain may be achieved up to 30% with 1.5% loss in accuracy of the arithmetic for 16-bit precision mode.

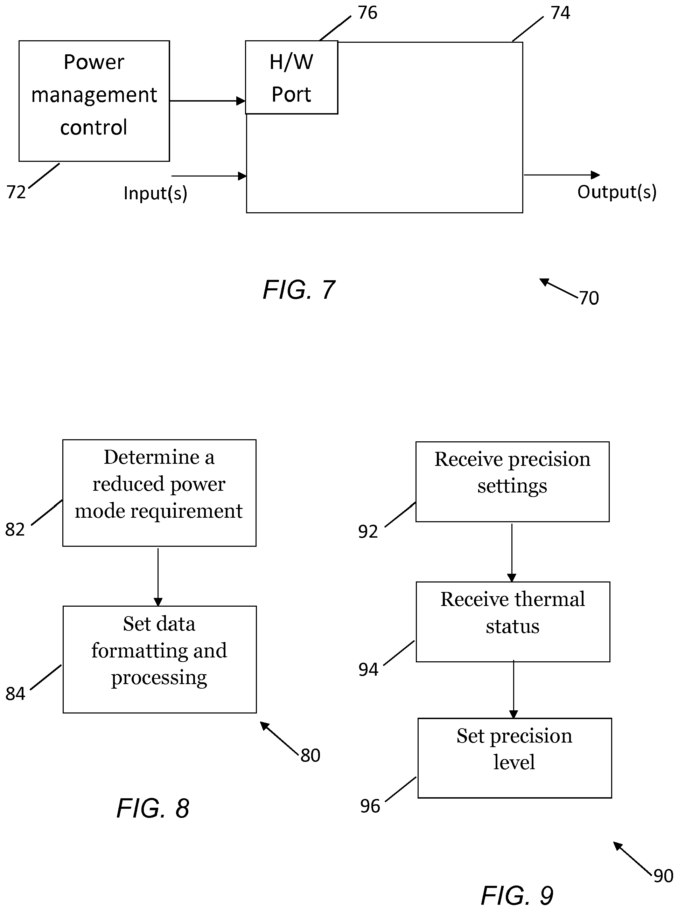

FIG. 7 is a block diagram of a system, indicated generally by the reference numeral 70, in accordance with an example embodiment. The system comprises a power management control module 72 and a computer system 74. The computer system 74 includes a hardware port 76, which hardware point may be the hardware port 65 of the system 60 described above.

The computer system 74 receives one or more inputs and provides one or more outputs. The hardware port 76 receives a power level control signal from the power management controller 72.

FIG. 8 is a flow chart showing an algorithm, indicated generally by the reference numeral 80, in accordance with an example embodiment. The algorithm 80 may be implemented by the system 70 described above.

The algorithm 80 starts at operation 82 where a requirement for reduced power consumption is determined. The operation 82 may be implemented by the power management module 72 described above. The operation 82 may, for example, include detecting that system workload requirements and/or system heat generation require that a lower power mode be entered.

At operation 84, data formatting and processing are set in accordance with the reduced power mode requirement. The operation 84 may be implemented by instructing use of a lower precision level by instructing the hardware port 65 accordingly.

FIG. 9 is a flow chart showing an algorithm, indicated generally by the reference numeral 90, in accordance with an example embodiment. The algorithm 90 may be implemented by the system 70 described above.

The algorithm 90 starts at operation 92, where precision settings are received, for example at the power management module 72. The precision settings may relate to a particular function or a particular process and may include, for example, a minimum required or desired precision level for an arithmetic operation or a maximum required or desired precision level of an arithmetic operation.

At operation 94, a thermal status is received, for example at the power management module 72. The thermal status may, for example, indicate the extent to which a high precision level can be delivered by a system, such as the computer system 74. Thermal status may be defined based on at least one temperature measurement.

At operation 96, a precision level is set, for example by the power management module 72.

By way of example, the algorithm 90 may receive a request for a high precision level, but the power management module may determine that this is not possible and instruct the use of a lower precision level. In another example, the algorithm 90 may receive an indication that a high precision level is essential for a particular function; the power management module may then instruct the use of the higher precision level even if the thermal status indicates that a lower precision level would be preferred; in that scenario, a precision level of a different function may be lowered.

In simulations, existing ASIP floating point data paths were modified, and synthesized, for the evaluation of the methods described hrein, while the original design was utilized as reference. Bypass of floating-point paths can be used to select desired mantissa bits from the path and/or padding extra bits path, registers or register-files to a constant value, zero. Bypassing could also be extended beyond mantissa bits. As an example, certain bits of exponents can always be kept constant if the range at arithmetic result is going to affect only fewer range of bits. Counters and shifters are components that can potentially increase power savings. A faster implementation of leading and trailing 0/1 counters such as balance tree search counters can utilize bypassing to squeeze some more powers savings. Multipliers and Adders such as Modified-Booth encoded multipliers or Carry-save adders or any other implementation can be re-modified with bypassing and driving constant values to reduce switching activity.

Synthesis results summarized in tables 1 and 2 below demonstrates that reduction in precision significantly reduces dynamic power consumption of an ASIP. Negative numbers in the presented tables signify a reduction whereas positive numbers signify an increase. It is interesting to observe that addition of dynamicity in the design adds 4% area overhead to the ASIP and consumes 4% more dynamic power for single floating-point precision whereas 13% power consumption reduction in 24-bit precision representation and 30% power reduction in 16-bit precision representation.

**Table 1: measurements (Reference design)**

| Precision (bits) | Power (mW) | | | | Accuracy loss (%) | Area | |
|---|---|---|---|---|---|---|---|
| | Internal | Switching | Dynamic | Gain (%) | | Mm² | Gain (%) |
| 32 | 10.275 | 4.957 | 15.232 | N/A | N/A | 0.121 | N/A |

**Table 2: measurements (Revised design)**

| Precision (bits) | Power (mW) | | | | Accuracy loss (%) | Area | |
|---|---|---|---|---|---|---|---|
| | Internal | Switching | Dynamic | Gain (%) | | Mm² | Gain (%) |
| 32 | 10.755 | 5.089 | 15.844 | -4 | 0 | 0.126 | 4 |
| 24 | 9.460 | 3.802 | 13.262 | +13 | 0 | 0.126 | 4 |
| 16 | 8.136 | 2.512 | 10.648 | +30 | -1.5 | 0.126 | 4 |

In terms of accuracy, for generated set of data, 1.5% average accuracy loss was measured for 16-bit precision whereas 24- and 32-bit precisions suffered no accuracy loss. It is can hence be concluded that, for these examples, 24-bit precision could be used interchangeably for 32-bit precision without any accuracy loss and still delivering significant power reduction.

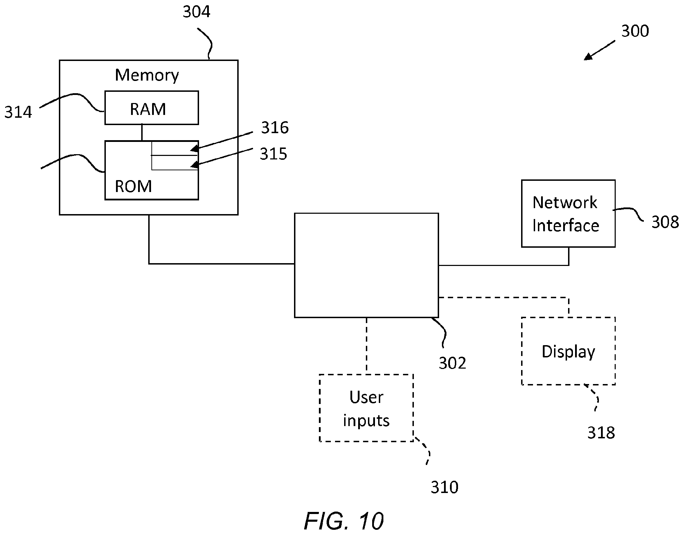

For completeness, FIG. 10 is an example schematic diagram of components of one or more of the modules for implementing the algorithms described above, which hereafter are referred to generically as processing systems 300. A processing system 300 may have a processor 302, a memory 304 coupled to the processor and comprised of a RAM 314 and ROM 312, and, optionally, user inputs 310 and a display 318. The processing system 300 may comprise one or more network interfaces 308 for connection to a network, e.g. a modem which may be wired or wireless.

The processor 302 is connected to each of the other components in order to control operation thereof.

The memory 304 may comprise a non-volatile memory, a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor, implements aspects of the algorithms 50, 80 and 90.

The processor 302 may take any suitable form. For instance, it may be a microcontroller, plural microcontrollers, a processor, or plural processors. Processor 302 may comprise processor circuitry.

The processing system 300 may be a standalone computer, a server, a console, or a network thereof.

In some embodiments, the processing system 300 may also be associated with external software applications. These may be applications stored on a remote server device and may run partly or exclusively on the remote server device. These applications may be termed cloud-hosted applications. The processing system 300 may be in communication with the remote server device in order to utilize the software application stored there.

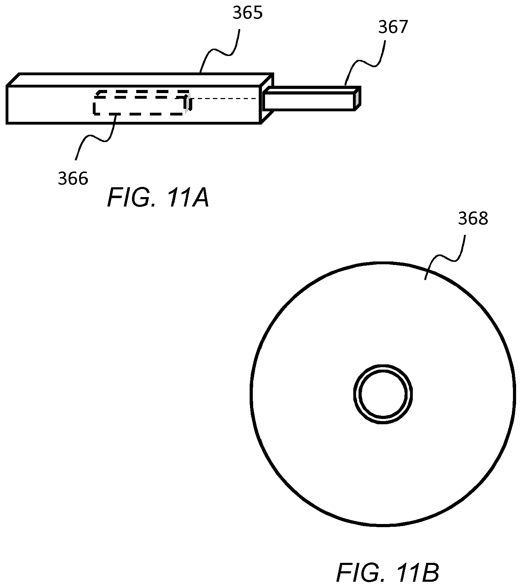

FIG. 11A and FIG. 11B show tangible media, respectively a removable memory unit 365 and a compact disc (CD) 368, storing computer-readable code which when run by a computer may perform methods according to embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of FIGS. 5, 8 and 9 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for enabling setting of a software-defined precision level for a floating point arithmetic unit;
means for enabling setting of a hardware-defined precision level for said floating-point arithmetic unit; and
means for defining one of a plurality of precision levels for said floating point arithmetic unit, wherein said precision level of said floating point arithmetic unit is set to said software-defined precision level unless over-ridden by said hardware-defined precision level.

2. An apparatus as claimed in claim 1, further comprising means for masking bits of said floating point arithmetic unit in a lower precision level.

3. An apparatus as claimed in claim 1 or claim 2, wherein said means for enabling setting of a software-defined precision level comprises a dedicated software instruction.

4. An apparatus as claimed in any one of claims 1 to 3, wherein said means for enabling setting of said hardware-defined precision level comprises a hardware port.

5. An apparatus as claimed in any one of the preceding claims, wherein said means for defining one of a plurality of precision levels for said floating point arithmetic unit comprises a precision select register.

6. An apparatus as claimed in any one of the preceding claims, further comprising means for defining a minimum required precision level for an arithmetic operation.

7. An apparatus as claimed in any one of the preceding claims, further comprising means for defining a maximum required precision level of an arithmetic operation.

8. An apparatus as claimed in any one of the preceding claims, further comprising means for determining a requirement for reduced power consumption.

9. An apparatus as claimed in claim 8, wherein said means for determining a requirement for reduced power consumption is configured to instruct use of a lower precision level using said means for enabling setting of hardware-defined precision level for said floating-point arithmetic unit.

10. An apparatus as claimed in claim 8 or claim 9, wherein said means for determining a requirement for reduced power consumption comprises a power management module.

11. An apparatus as claimed in any one of the preceding claims, wherein said plurality of precision levels for said floating point arithmetic unit comprises: 32-bit, 24-bit and 16-bit precision levels.

12. A system comprising:
a floating point arithmetic unit; and
an apparatus as claimed in any one of claims 1 to 11.

13. A method comprising defining one of a plurality of precision levels for a floating point arithmetic unit, wherein said precision level of said floating point arithmetic unit is set to a software-defined precision level unless over-ridden by a hardware-defined precision level.

14. A method as claimed in claim 13, further comprising masking bits of said floating point arithmetic unit in a lower precision level.

15. A computer program comprising instructions for causing an apparatus to perform at least: defining one of a plurality of precision levels for a floating point arithmetic unit, wherein said precision level of said floating point arithmetic unit is set to a software-defined precision level unless over-ridden by a hardware-defined precision level.
